Europäisches Patentamt

European Patent Office

Office européen des brevets

(19)

(11) Numéro de publication : **0 086 155**
**B1**

(12) **FASCICULE DE BREVET EUROPÉEN**

(45) Date de publication du fascicule du brevet :
29.07.87

(21) Numéro de dépôt : 83400243.8

(22) Date de dépôt : 04.02.83

(51) Int. Cl.⁴ : **B 24 B 19/00**, G 02 B   6/24

(54) **Procédé de polissage d'une fibre optique, application à la réalisation de dispositifs de couplage optique.**

(30) Priorité : 09.02.82 FR 8202052

(43) Date de publication de la demande :
17.08.83 Bulletin 83/33

(45) Mention de la délivrance du brevet :
29.07.87 Bulletin 87/31

(84) Etats contractants désignés :
BE DE GB

(56) Documents cités :
DE-A- 2 717 535
DE-A- 2 922 938
GB-A- 2 020 446

(73) Titulaire : **Rivoallan, Loic**
**Tossen Hat Kermoroc'h**
**F-22140 Begard (FR)**

(72) Inventeur : **Rivoallan, Loic**
**Tossen Hat Kermoroc'h**
**F-22140 Begard (FR)**

(74) Mandataire : **Mongrédien, André et al**
**c/o BREVATOME 25, rue de Ponthieu**
**F-75008 Paris (FR)**

EP 0 086 155 B1

## Description

La présente invention concerne un procédé de polissage d'une fibre optique. Elle s'applique notamment à la réalisation de dispositifs de couplage optique, de multiplexeurs optiques et de filtres de polarisation.

La fibre optique comportant un cœur et une gaine optique entourant celui-ci, le procédé de l'invention permet, comme on le verra par la suite, d'atteindre le cœur de la fibre par enlèvement d'une partie de sa gaine.

On connaît des procédés pour atteindre ou dénuder le cœur d'une telle fibre optique : le procédé d'attaque chimique de la gaine optique et le procédé d'usure de la gaine optique par un abrasif, après collage de la fibre sur un support, l'abrasif étant disposé sur un autre support qui est animé d'un mouvement plan et pratiquement aléatoire ou même totalement aléatoire.

Le procédé d'attaque chimique présente l'inconvénient de révéler tous les défauts de structure de la fibre optique et de conduire à une fragilisation de cette fibre pouvant mener à la cassure spontanée de ladite fibre au bout de quelques jours de fonctionnement d'un dispositif fabriqué à partir de la fibre en question.

Le procédé de polissage ou d'usure de la fibre par abrasion (voir DE-A-2 922 938), cité précédemment, conduit également à une fragilisation de la fibre, du fait du déplacement aléatoire ou quasi-aléatoire de l'abrasif sur la fibre, ce qui crée dans celle-ci un réseau de micro-défauts dont certains peuvent être perpendiculaires à l'axe de la fibre. Ces micro-défauts se développent sous l'action de contraintes appliquées à la fibre et de traces d'eau susceptibles d'être présentes au fond desdits défauts. Il est connu que de tels défauts donnent une grande fragilité à la fibre.

De plus, ce procédé de polissage nécessite le collage préalable de la fibre sur un support et la fragilité induite dans cette fibre par le procédé considéré rend généralement le décollage de la fibre impossible : même en dissolvant la colle employée, il n'est en général plus possible de manipuler la fibre ainsi traitée sans la briser.

La présente invention a pour but de remédier aux inconvénients des procédés précédents.

On connaît déjà le brevet DE-A-2 717 535 décrivant un procédé de fabrication d'une ramification pour une fibre optique, dans lequel il est seulement question de meuler les faces frontales de deux autres fibres, puis de raccorder ces faces entre elles et l'ensemble obtenu à la fibre.

L'invention a pour objet un procédé d'abrasion d'une fibre optique comportant un cœur et une gaine, en vue de dénuder au moins partiellement le cœur de la fibre, procédé dans lequel on réalise l'abrasion de la fibre dans le sens longitudinal de celle-ci, ce procédé étant caractérisé en ce que l'abrasion de la fibre est réalisée sur au moins une zone de ladite fibre, à l'aide d'au moins un rouleau muni d'un abrasif en surface.

Le polissage de la fibre par abrasion dans le sens de la longueur de cette fibre, c'est-à-dire de l'axe de celle-ci, évite la création dans ladite fibre de micro-défauts perpendiculaires à cet axe et empêche ainsi la fragilisation de la partie abrasée de la fibre. On peut donc amincir cette fibre jusqu'à dénuder au moins partiellement son cœur, tout en conservant à cette fibre une résistance mécanique suffisante pour permettre la manipulation ultérieure de la partie de fibre traitée par le procédé de l'invention, sans casser la fibre dans cette partie.

Selon une caractéristique particulière du procédé objet de l'invention, ladite abrasion est réalisée à l'aide de deux rouleaux munis d'un abrasif en surface, parallèles entre eux et disposés de façon que la fibre optique soit prise entre ces deux rouleaux.

L'atteinte du cœur, à la suite de ladite abrasion, peut être par exemple détectée en injectant de la lumière à une extrémité de la fibre optique et en contrôlant l'intensité lumineuse parvenant à l'autre extrémité, de façon à repérer l'instant où cette intensité commence à diminuer, cette diminution traduisant l'atteinte du cœur.

Comme on l'a déjà indiqué, le procédé objet de l'invention s'applique à la réalisation de dispositifs de couplage optique.

Ces dispositifs de couplage optique peuvent par exemple comprendre deux fibres optiques munies chacune d'une zone abrasée (par le procédé objet de l'invention) et fixées l'une à l'autre dans une position où les zones abrasées sont l'une contre l'autre, de façon que de la lumière se propageant dans l'une des fibres puisse passer dans l'autre.

Les fibres sont par exemple fixées l'une à l'autre par soudure, brasage ou collage. Ces fibres sont polies (par le procédé objet de l'invention) jusqu'à révéler chacune une partie de leur cœur, ces parties correspondant auxdites zones abrasées, puis les fibres sont fixées de façon que lesdites parties soient en contact l'une avec l'autre.

Le procédé objet de l'invention s'applique également à la réalisation d'autres types de dispositifs de couplage optique qui peuvent par exemple comprendre une fibre optique dont une extrémité est une lentille de forme quasi-hémiellipsoïdale et qui est obtenue à partir d'une fibre optique primaire polie (par le procédé objet de l'invention) selon deux zones opposées puis cassée transversalement et symétriquement en deux parties dans ces zones, l'extrémité d'une partie, extrémité résultant de la cassure, étant ensuite soumise à un chauffage provoquant une fusion de cette extrémité, de manière à former ladite lentille, pour que ladite partie ainsi traitée constitue ladite fibre optique.

Le polissage de la fibre primaire est effectué jusqu'à dénuder une portion du cœur dans chacune des deux zones opposées. Le chauffage peut être effectué dans le faisceau focalisé d'un laser.

Par ailleurs, la formation de la lentille peut être contrôlée à l'aide du rayonnement en champ lointain issu de ladite lentille lorsque de la lumière est injectée à l'autre extrémité de la fibre optique.

L'invention sera mieux comprise à la lecture de la description qui suit d'exemples de mise en œuvre et d'application donnés à titre indicatif et non limitatif, en référence aux dessins annexés, sur lesquels :

la figure 1 est une vue schématique d'une installation pour la mise en œuvre du procédé objet de l'invention ;

La figure 2 est une vue schématique d'une variante de ladite installation ;

la figure 3 est une vue schématique d'une fibre optique dont une zone a été polie par le procédé de l'invention ;

la figure 4 est une vue schématique d'un dispositif de couplage optique résultant de l'association de deux fibres optiques conformes à celle qui est représentée sur la figure 3 ;

la figure 5 est une vue schématique d'une fibre optique primaire dont deux zones opposées ont été polies par le procédé de l'invention ;

la figure 6 est une vue schématique d'une fibre optique obtenue par cassure de la fibre optique primaire de la figure 5 dans lesdites zones opposées ;

la figure 7 est une vue schématique d'une installation pour former une lentille quasi-hémiellipsoïdale à l'extrémité d'une fibre optique ;

la figure 8 est une vue schématique de la fibre optique de la figure 6, une fois traitée dans l'installation de la figure 7, et

la figure 9 est une vue schématique d'un couplage optique obtenu avec la fibre optique de la figure 8.

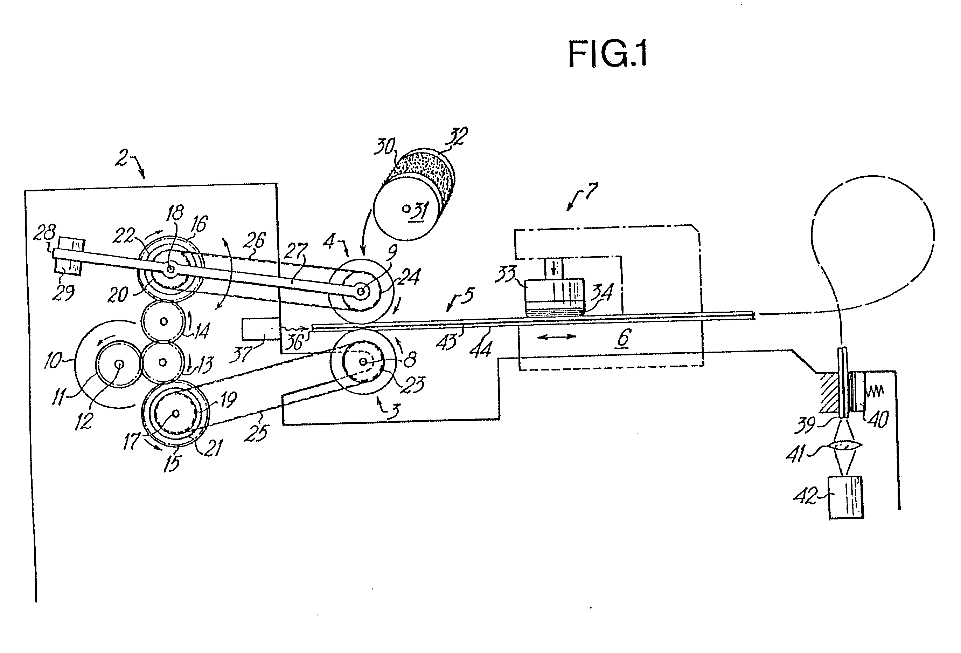

Sur la figure 1, on a représenté schématiquement une installation pour la mise en œuvre du procédé objet de l'invention. Cette installation comporte essentiellement un bâti 2 muni de deux rouleaux 3 et 4, prévus pour le polissage d'une fibre optique 5, et d'une platine 6 de déplacement comportant des moyens 7 de maintien de la fibre 5 sur la platine 6. Les deux rouleaux 3 et 4 sont prévus pour enserrer la fibre 5. Leurs axes de rotation respectifs 8 et 9 sont parallèles et horizontaux. L'un 4 des deux rouleaux, ou rouleau supérieur, est disposé au-dessus de l'autre 3, ou rouleau inférieur. Un moteur électrique 10 permet d'entraîner ces deux rouleaux en rotation, de façon qu'ils tournent avec des sens de rotation opposés.

Pour ce faire, un pignon principal 11 est monté sur l'axe 12 de rotation du moteur 10 et permet à ce dernier d'entraîner un premier pignon intermédiaire 13 en rotation qui entraîne lui-même en rotation un second pignon intermédiaire 14. Ces deux pignons intermédiaires 13 et 14 entraînent respectivement en rotation deux pignons 15 et 16 sur les axes 17 et 18 desquels sont respectivement montées librement deux poulies crantées 19 et 20. Des moyens d'embrayage 21 et 22 réalisables par l'homme de l'art, des clavettes par exemple, sont respectivement interposés entre ces poulies 19 et 20 et les pignons 15 et 16. Les poulies 19 et 20 sont respectivement reliées à deux autres poulies crantées 23 et 24, respectivement par l'intermédiaire de deux courroies crantées 25 et 26. Les autres poulies crantées 23 et 24 sont respectivement solidaires des rouleaux inférieur 3 et supérieur 4. Lorsque les moyens d'embrayage 21 et 22 sont en prise, les poulies 19 et 20, qui sont alors respectivement rendues solidaires des pignons 15 et 16, entraînent respectivement en rotation les autres poulies 23 et 24, par l'intermédiaire des courroies 25 et 26, et par conséquent les rouleaux 3 et 4. Lorsque l'un des moyens d'embrayage 21 et 22 n'est pas en prise, seul l'un des deux rouleaux 3 et 4 tourne.

Le moteur 10, les pignons 13, 14, 15 et 16 et le rouleau inférieur 3 ont des positions définies, par rapport au bâti 2. Ce n'est pas le cas du rouleau supérieur 4 : deux barres parallèles dont une seule, référencée 27, est visible sur la figure 1, sont disposées de manière à encadrer le rouleau supérieur 4 et joignent l'axe 9 de ce rouleau supérieur 4 à l'axe 18 du pignon 16 correspondant audit rouleau supérieur 4 de façon que ces axes 9 et 18 puissent tourner librement dans ces barres. Le rouleau supérieur 4 peut ainsi être écarté du rouleau inférieur 3 et revenir reposer contre ce dernier, par son propre poids. A l'extrémité 28 de la barre 27, extrémité située à l'opposé du rouleau supérieur 4 par rapport au pignon 16 correspondant à ce dernier, est prévu un contre-poids 29 de réglage de la force d'appui du rouleau supérieur 4 contre le rouleau inférieur 3. Un autre contre-poids, non visible sur la figure 1, est bien entendu prévu au même endroit sur l'autre barre (non visible). Bien entendu, les divers moyens d'entraînement en rotation des rouleaux pourraient être prévus pour que ces rouleaux soient positionnés verticalement. Lesdits rouleaux seraient alors en outre munis de moyens de rappel l'un vers l'autre.

Les rouleaux 3 et 4 sont munis d'un abrasif 30 en surface et constitués d'une matière suffisamment souple pour que le passage d'un grain d'abrasif sur la fibre 5 n'entraîne pas de surpression locale trop élevée qui pourrait endommager cette fibre 5. De plus, la surface des rouleaux 3 et 4 est prévue pour maintenir les grains d'abrasif 30. A titre d'exemple, les rouleaux 3 et 4 sont des cylindres 31 en caoutchouc dont la surface est recouverte d'une toile 32. Cette toile est apte à retenir les grains d'abrasif. On pourrait également réaliser les rouleaux 3 et 4 en liège, et la plupart des élastomères et des matières d'origine végétale comme le bois de balsa ou le peuplier conviendraient aussi pour les réaliser. L'abrasif 30 est par exemple une pâte diamantée commercialement disponible qui comporte des grains de diamant dont les dimensions peuvent être inférieures à 0,5 μm.

La platine 6 est déplaçable perpendiculairement aux rouleaux 3 et 4. Les moyens 7 de maintien de la fibre 5 sur la platine 6 consistent par exemple en une pince du type « sauterelle » dont la partie pressante 33 est munie d'un coussinet 34 de caoutchouc prévu pour éviter d'induire des défauts dans la partie pressée de la fibre 5.

Pour réaliser le polissage de la fibre 5, celle-ci est immobilisée grâce à la pince 7 sur la platine 6, perpendiculairement aux rouleaux 3 et 4. On soulève alors le rouleau supérieur 4 et l'on positionne sur le rouleau 3 inférieur la portion de fibre à polir, par déplacement de la platine 6 en direction des rouleaux. On abaisse ensuite le rouleau supérieur 4, on met les embrayages 21 et 22 en prise et l'on met en route le moteur 10. Le polissage a ainsi lieu sur deux zones opposées, axialement symétriques, de la fibre 5, comme on le verra mieux sur la figure 5, où une fibre ainsi traitée est représentée. En tournant, les rouleaux entraînent l'abrasif dans le sens axial de la fibre 5. On peut apporter en permanence de la pâte abrasive sur les rouleaux 3 et 4 pour compenser des pertes en abrasif.

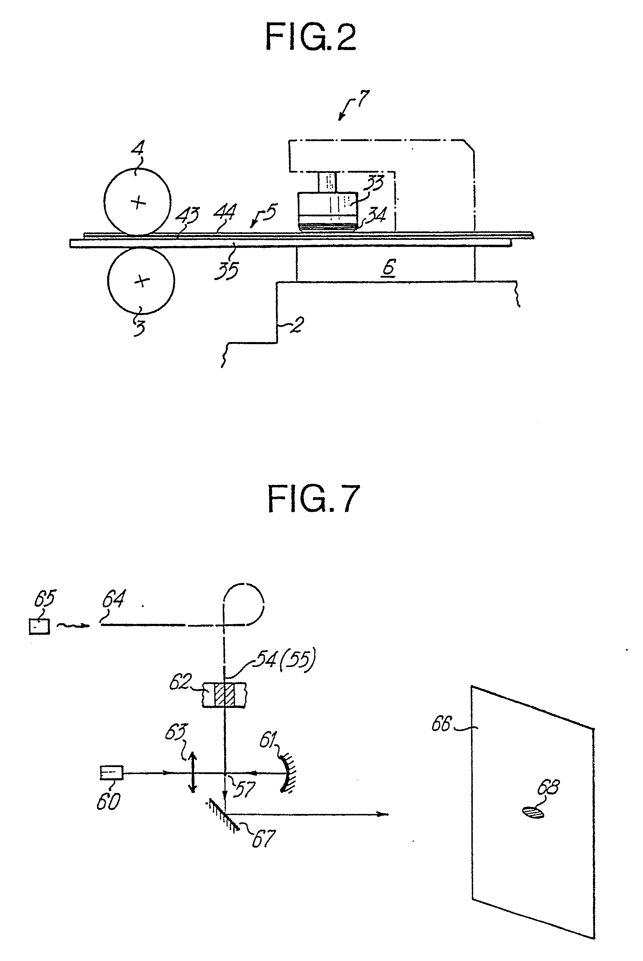

Lorsque l'on souhaite n'abraser la fibre qu'en un seul endroit, on immobilise l'un des deux rouleaux 3 et 4 en débrayant l'un des deux embrayages 21 et 22 correspondant. Pour n'abraser la fibre qu'en un seul endroit, on peut également protéger une partie de la fibre 5 par une lame 35 solidaire de la platine 6 de déplacement et introduite en même temps que la fibre entre les deux rouleaux, comme on la représente schématiquement sur la figure 2. La lame 35 est par exemple une lame porte-objet de microscope.

A titre indicatif et non limitatif, les rouleaux ont un diamètre de 13 mm. Ce diamètre n'a d'influence que sur la concavité d'une zone abrasée de la fibre. Par ailleurs, la vitesse d'abrasion obtenue avec des rouleaux en caoutchouc entoilé est de l'ordre de 2,5 $\mu$m par minute, pour une vitesse de rotation des rouleaux d'environ 1 000 tours par minute. Ceci permet d'accéder au cœur d'une fibre optique monomode en une vingtaine de minutes (pour une fibre de diamètre extérieur égal à 100 $\mu$m).

Revenant à la figure 1, pour une fibre optique comportant un cœur 43 et une gaine 44 et dont on veut dénuder au moins partiellement le cœur par le procédé de l'invention, il est possible de détecter l'atteinte de ce cœur par le (ou les) rouleau(x), de la façon suivante : préalablement à l'opération de polissage, une extrémité 36 de la fibre 5 est couplée à un émetteur de lumière 37, tel qu'une diode électroluminescente, solidaire du bâti 2 et alimenté par des moyens non représentés. L'autre extrémité 39 de la fibre 5 est maintenue par des moyens 40 de maintien solidaires du bâti 2 et couplée, par l'intermédiaire d'une optique de liaison 41, à un détecteur 42 de lumière également solidaire du bâti 2. La lumière injectée par la diode 37 dans la fibre 5 est propagée par cette dernière et parvient au détecteur 42. En contrôlant l'intensité lumineuse reçue par celui-ci, on peut repérer l'instant où cette intensité commence à diminuer, cette diminution traduisant l'atteinte du cœur. En effet, lorsqu'une portion de la gaine de la fibre 5 est enlevée jusqu'à atteindre le cœur, la lumière guidée par la fibre quitte en partie celle-ci. Le détecteur 42 est par exemple un détecteur optoélectronique à seuil dont la sortie peut soit commander le moteur 10 par des moyens connus et non représentés, pour arrêter celui-ci lorsque le cœur est atteint, soit commander une alarme, par exemple sonore ou lumineuse, pour prévenir un opérateur s'occupant de l'installation de polissage afin qu'il arrête le moteur.

Bien entendu, on pourrait polir plusieurs fibres en même temps dans ladite installation en les immobilisant toutes sur la platine 6 et en les plaçant entre les rouleaux 3 et 4. On pourrait également polir chaque fibre à différents endroits de celle-ci, en déplaçant la platine 6 après polissage de l'un des endroits, pour positionner l'endroit suivant entre les rouleaux.

On peut illustrer la conservation des caractéristiques mécaniques d'une fibre polie par le procédé de l'invention, en notant qu'une fibre de diamètre extérieur 100 $\mu$m résiste à une traction de l'ordre de 3,50 N, correspondant à une contrainte de $3,5.10^{-3}$ N $\cdot$ $\mu$m$^{-2}$, alors que la force moyenne à la rupture de la fibre non polie est de 30 N, ce qui correspond à une contrainte de l'ordre de $3,8 \cdot 10^{-3}$ N $\cdot$ $\mu$m$^{-2}$.

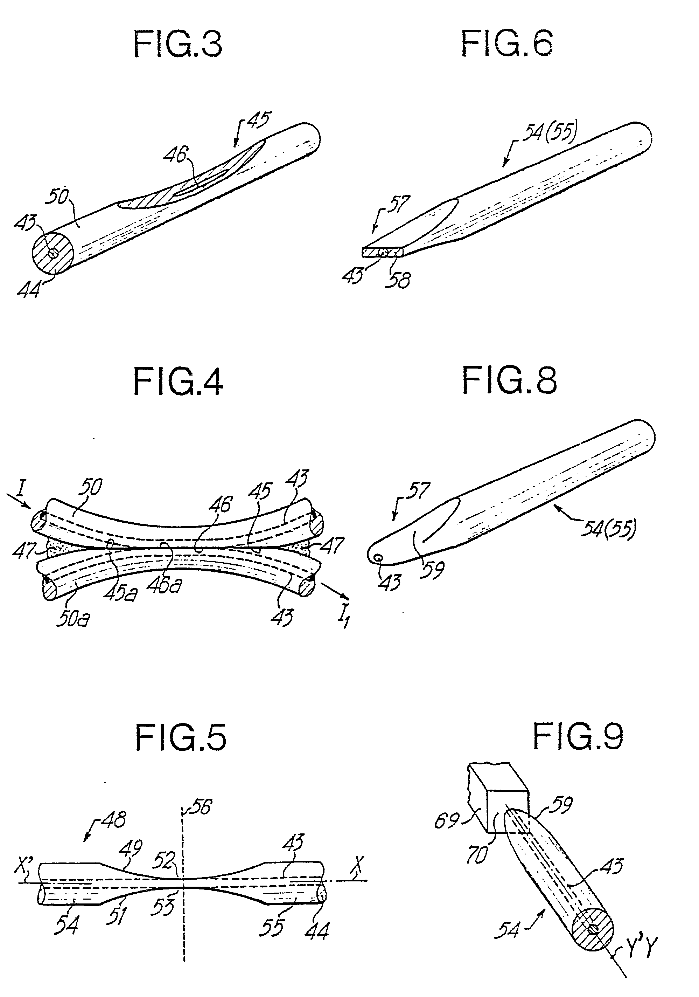

Sur la figure 3, on a représenté schématiquement une fibre optique 50 qui comporte un cœur 43 entouré par une gaine 44 et dont une zone 45 a été polie par le procédé de l'invention dans l'installation représentée sur la figure 1, jusqu'à révéler une portion 46 du cœur 43.

Sur la figure 4, on a représenté schématiquement un dispositif de couplage optique réalisé à l'aide de deux fibres optiques 50 et 50a conformes à celle qui est représentée sur la figure 3. Ces fibres 50 et 50a comportent respectivement des zones abrasées 45 et 45a de l'ordre de 1,5 à 3 mm de long par exemple, obtenues par le procédé de l'invention, qui révèlent respectivement des portions 46 et 46a du cœur 43 desdites fibres. Celles-ci sont maintenues courbées de façon à redresser les zones abrasées pour que ces zones ne présentent qu'une courbure pratiquement nulle et fixées l'une à l'autre par de la colle 47 (ou encore par fusion, brasage ou soudage), dans une position où les zones abrasées 45 et 45a sont l'une contre l'autre et où les portions 46 et 46a de cœur apparentes sont également l'une contre l'autre (et pratiquement parallèles l'une à l'autre). (Dans le cas de fibres sans gaine, on abraserait chaque fibre en une zone de cette fibre et l'on fixerait les fibres l'une à l'autre dans une position où ces zones seraient l'une contre l'autre). Une partie $I_1$ de l'intensité I d'une lumière se propageant dans l'une des fibres peut ainsi passer dans l'autre fibre.

Sur la figure 5, on a représenté schématiquement une fibre optique primaire 48, comportant un cœur 43 entouré par une gaine 44. Deux zones opposées 49 et 51 de cette fibre, symétriques l'une de l'autre par rapport à l'axe X'X de la fibre, ont été polies simultanément par le procédé de l'invention dans l'installation représentée sur la figure 1, jusqu'à révéler respectivement des portions 52 et 53 du cœur 43 également symétriques l'une de l'autre par rapport à l'axe X'X de la fibre primaire 48. A l'aide d'une machine à casser les fibres, du genre de celle dont le principe est indiqué dans l'article de D. Gloge et al., intitulé « Optical Fiber and Preparation for Low Loss Splices », publié dans le Bell System Technical Journal, vol. 52, n° 9, nov. 1973, pages 1579 à 1588, et en utilisant un rayon de courbure infini pour la fibre primaire 48, ce qui convient, contrairement à l'opinion des auteurs de l'article précédent, on casse transversalement et symétriquement en deux parties 54 et 55, dans les zones 49 et 51, cette fibre primaire 48. En d'autres termes, celle-ci est cassée en deux selon un plan représenté par un pointillé 56 sur la figure 5, ce plan étant perpendiculaire à l'axe X'X de la fibre 48 et divisant les zones abrasées 49 et 51, et donc les portions 52 et 53 de cœur apparentes, en deux parties égales. On a ainsi réalisé une cassure plane et perpendiculaire à l'axe de la fibre 48. Comme on peut le voir sur la figure 6, chaque partie 54 ou 55 de cette fibre primaire 48 présente ainsi en son extrémité 57 une section 58 sensiblement rectangulaire, le cœur 43 apparaissant au milieu de ladite section.

Ladite extrémité 57 présente quant à elle sensiblement la forme de l'extrémité active d'un tournevis classique.

Une fusion de ladite extrémité 57 d'une partie 54 ou 55 de la fibre primaire 48, dans un gradient brusque de température, conduit à la constitution d'une lentille 59 de forme quasi-hémiellipsoïdale en l'extrémité 57, comme on l'a représenté schématiquement sur la figure 8, du fait de l'action de tensions superficielles sur l'extrémité 57 lorsque celle-ci est en fusion.

Sur la figure 7, on a représenté schématiquement une installation permettant de réaliser une telle lentille 59. Cette installation comporte essentiellement un laser 60 et un moyen de réflexion 61, tel qu'un miroir sphérique, du faisceau issu de ce laser. La fibre constituée par l'une des parties 54 ou 55 représentées sur la figure 6 est immobilisée verticalement dans un support 62, l'extrémité 57 étant tournée vers le bas, pour éviter tout problème lié à la pesanteur. Le laser 60 est par exemple un laser à $CO_2$ de 3 W. On focalise horizontalement le faisceau issu de ce laser, sur l'extrémité 57 de la fibre 54 (ou 55), à l'aide d'une optique 63 par exemple constituée par une lentille en ZnSe de 50 mm de distance focale. Le miroir 61 par exemple sphérique est situé à l'opposé du faisceau incident par rapport à l'extrémité 57 et prévu pour refocaliser sur cette extrémité les parties de ce faisceau qui passent de chaque côté de ladite extrémité. On forme ainsi la lentille 59 à l'extrémité 57 (figure 8).

Le contrôle de la formation de cette lentille est effectué en injectant à l'autre extrémité 64 de la fibre 54 (ou 55) de la lumière issue par exemple d'une diode laser 65 couplée à la fibre et en envoyant la lumière issue de l'extrémité 57 sur un écran 66 placé par exemple à quelques centimètres de ladite extrémité 57, par l'intermédiaire d'un autre miroir 67, de façon à observer sur l'écran 66 le rayonnement en champ lointain issu de la lentille en cours de formation, rayonnement qui se traduit par une ellipse lumineuse 68 sur l'écran 66. Lorsque la forme de champ lointain souhaitée est obtenue, ou interrompt le chauffage de l'extrémité 57 par le laser 60. Ladite forme peut être préalablement matérialisée sur l'écran 66 : on interrompt alors le chauffage lorsque l'ellipse projetée et l'ellipse préalablement tracée coïncident.

L'installation représentée sur la figure 7 et que l'on vient de décrire permet d'obtenir aisément des lentilles présentant une ellipticité de champ lointain de 1/5. Il est connu, notamment par l'artice de JUN-ICHI SAKAI et al., intitulé « Design of a miniature lens for semiconductor laser to single-mode fiber coupling », publié dans IEEE Journal of Quantum Electronics, vol. QE 16, n° 10, Oct. 80, pages 1059 à 1066, que de telles lentilles donnent des rendements de couplage laser-fibre de l'ordre de 90 %. Sur la figure 9, on a représenté schématiquement un dispositif de couplage optique entre une fibre 54, terminée par une lentille 59 obtenue comme on l'a expliqué précédemment, et un laser à semi-conducteur 69, ledit couplage étant réalisé grâce à la lentille 59, en plaçant celle-ci près de la surface émettrice 70 du laser 69, l'axe Y'Y de la fibre étant normal à cette surface, au moins au voisinage de la lentille 59.

**Revendications**

1. Procédé d'abrasion d'une fibre optique (5 ou 48 ou 50 ou 50a) comportant un cœur (43) et une gaine (44), en vue de dénuder au moins partiellement le cœur de la fibre, procédé dans lequel on réalise l'abrasion de la fibre dans le sens longitudinal de celle-ci, ce procédé étant caractérisé en ce que l'abrasion de la fibre (5 ou 48 ou 50 ou 50a) est réalisée sur au moins une zone de ladite fibre, à l'aide d'au moins un rouleau (3 ou 4) muni d'un abrasif (30) en surface.

2. Procédé selon la revendication 1, caractérisé en ce que ladite abrasion est réalisée à l'aide de deux rouleaux (3, 4) munis d'un abrasif (30) en surface, parallèles entre eux et disposés de façon que la fibre optique (5 ou 48) soit prise entre ces deux rouleaux (3, 4).

3. Procédé selon l'une quelconque des revendications 1 et 2, caractérisé en ce que l'atteinte du cœur (43), à la suite de ladite abrasion, est détectée en injectant de la lumière à une extrémité (36) de la fibre optique et en contrôlant l'intensité lumineuse parvenant à l'autre extrémité (39), de façon à repérer l'instant où cette intensité commence à diminuer, cette diminution traduisant l'atteinte du cœur (43).

4. Application du procédé selon l'une quelconque des revendications 1 à 3, à la réalisation de dispositifs de couplage optique.

5. Application selon la revendication 4, caractérisée en ce que ces dispositifs de couplage optique comprennent deux fibres optiques (50, 50a) munies chacune d'une zone abrasée (45, 45a) et fixées l'une à l'autre dans une position où les zones abrasées (45, 45a) sont l'une contre l'autre, de façon que de la lumière se propageant dans l'une des fibres puisse passer dans l'autre.

6. Application selon la revendication 4, caractérisée en ce que ces dispositifs de couplage optique comprennent une fibre optique (54 ou 55) dont une extrémité (57) est une lentille (59) de forme quasi-hémiellipsoïdale et qui est obtenue à partir d'une fibre optique primaire (48) polie selon deux zones (49, 51) opposées puis cassée transversalement et symétriquement en deux parties dans ces zones (49, 51), l'extrémité d'une partie, extrémité résultant de la cassure, étant ensuite soumise à un chauffage provoquant une fusion de cette extrémité, de manière à former ladite lentille (59), pour que ladite partie ainsi traitée constitue ladite fibre optique (54 ou 55).

7. Application selon la revendication 6, caractérisée en ce que la formation de la lentille (59) est contrôlée à l'aide du rayonnement en champ lointain issu de ladite lentille (59) lorsque de la lumière est injectée à l'autre extrémité (64) de la fibre optique (54 ou 55).

**Claims**

1. Process for the abrasion of an optical fibre (5 or 48 or 50 or 50a) comprising a core (43) and a sheath (44), with a view to at least partially stripping the core of the fibre, in which process the abrasion of the fibre is carried out in the longitudinal direction of the fibre, this process being characterized in that the abrasion of the fibre (5 or 48 or 50 or 50a) is carried out on at least one zone of the said fibre, by means of at least one roller (3 or 4) provided with a surface abrasive (30).

2. Process according to Claim 1, characterized in that the said abrasion is carried out by means of two rollers (3, 4) which are provided with a surface abrasive (30) and which are parallel to one another and which are disposed in such a manner that the optical fibre (5 or 48) is received between these two rollers (3, 4).

3. Process according to either one of Claims 1 and 2, characterized in that striking of the core (43), in consequence of the said abrasion, is detected by injecting light at one end (36) of the optical fibre and by monitoring the luminous intensity arriving at the other end (39), in such a manner as to record the instant when this intensity commences to diminish, this diminution reflecting the striking of the core (43).

4. Application of the process according to any one of Claims 1 to 3 to the construction of optical coupling devices.

5. Application according to Claim 4, characterized in that these optical coupling devices include two optical fibres (50, 50a), each of which is provided with an abraded zone (45, 45a) and which are fixed to one another in a position in which the abraded zones (45, 45a) are one against the other, in such a manner that light propagating in one of the fibres can pass into the other.

6. Application according to Claim 4, characterized in that these optical coupling devices include an optical fibre (54 or 55), one end (57) of which is a lens (59) of quasi-hemiellipsoidal shape and which is obtained from a primary optical fibre (48) polished according to two opposite zones (49, 51) and then broken transversely and symmetrically into two parts in theses zones (49, 51), the end of one part, being the end resulting from the break, being then subjected to heating causing fusion of this end, in such a manner as to form the said lens (59), in order that the said part thus treated should constitute the said optical fibre (54 or 55).

7. Application according to Claim 6, characterized in that the formation of the lens (59) is monitored by means of the far-field radiation emerging from the said lens (59) when light is injected at the other end (64) of the optical fibre (54 or 55).

**Patentansprüche**

1. Verfahren zum Abschleifen optischer, einen Kern (43) und eine Hülle (44) aufweisender Fasern (5 oder 48 oder 50 oder 50a), um wenigstens teilweise den Kern der Faser freizulegen, wobei bei dem Verfahren das Abschleifen der Faser in deren Längsrichtung erfolgt, dadurch gekennzeichnet, daß das Abschleifen der Faser (5 oder 48 oder 50 oder 50a) an wenigstens einem Bereich der Faser mit Hilfe wenigstens einer Rolle (3 oder 4) durchgeführt wird, die auf ihrer Oberfläche mit einem Schleifmittel (30) versehen ist.

2. Verfahren nach Anspruch 1, dadurch gekennzeichnet, daß das Abschleifen mit Hilfe von zwei auf ihrer Oberfläche mit einem Schleifmittel (30) versehenen Rollen (3, 4) durchgeführt wird, die zueinander parallel und derart angeordnet sind, daß die optische Faser (5 oder 48) zwischen diesen beiden Rollen (3, 4) erfaßt wird.

3. Verfahren nach Anspruch 1 oder 2, dadurch gekennzeichnet, daß die Erreichen des Kernes (43) beim Abschleifen dadurch festgestellt wird, daß Licht an einem Ende (36) der optischen Faser eingebracht und die an das andere Ende (39) gelangende Lichtintensität überwacht derart, daß der Zeitpunkt festgehalten wird, zu dem eine Abschwächung dieser Intensität beginnt, wobei diese Abschwächung das Erreichen des Kernes (43) wiedergibt.

4. Verwendung des Verfahrens nach einem der Ansprüche 1 bis 3 zur Herstellung von optischen Kopplungsvorrichtungen.

5. Verwendung nach Anspruch 4, dadurch gekennzeichnet, daß die optische Kopplungsvorrichtung zwei optische Fasern (50, 50a) umfaßt, von denen jede mit einem abgeschliffenen Bereich (45, 45a) versehen ist und die aneinander in einer Lage befestigt sind, in der sich die abgeschliffenen Bereiche (45, 45a) aneinander befinden derart, daß das sich in einer der Fasern fortpflanzende Licht in die andere gelangen kann.

6. Verwendung nach Anspruch 4, dadurch gekennzeichnet, daß diese optischen Kopplungsvorrichtungen eine optische Faser (54 oder 55) umfassen, deren eines Ende (57) eine Linse (59) von quasi-halbellipsoider Form ist und ausgehend von einer primären optischen Faser (48) erhalten wird, die in zwei gegenüberliegenden Bereichen (49, 51) poliert und daraufhin quer und symmetrisch in diesen Bereichen (49, 51) in zwei Teile gebrochen wird, wobei daraufhin das Ende eines Teils, das sich durch das Brechen ergibt, einer Erwärmung ausgesetzt wird, die das Schmelzen dieses Endes derart bewirkt, daß diese Linse (59) gebildet wird, damit dieser derart behandelte Teil die optische Faser (54 oder 55) darstellt.

7. Verwendung nach Anspruch 6, dadurch gekennzeichnet, daß die Bildung der Linse (59) mit Hilfe eines entfernten Strahlungsfeldes überwacht wird, das von der Linse (59) ausgeht, wenn Licht am anderen Ende (64) der optischen Faser (54 oder 55) eingebracht wird.

# FIG.1

# FIG.2

# FIG.7

# FIG.3

# FIG.6

# FIG.4

# FIG.8

# FIG.5

# FIG.9